# EUROPÄISCHE PATENTANMELDUNG

(11) **EP 3 760 026 A1**
(43) Veröffentlichungstag der Anmeldung: **06.01.2021**
(21) Anmeldenummer: 20162287.5
(22) Anmeldetag: 11.03.2020
(51) Int. Cl.: A01D 41/127, A01D 43/08, A01D 41/12, A01D 43/063, A01D 43/07, A01D 43/073, B65G 67/22

(54) **LANDWIRTSCHAFTLICHE ARBEITSMASCHINE MIT VERSTELLBAREM AUSWURFKRÜMMER**

(30) Priorität: 02.07.2019 DE 102019004647
(71) Anmelder: CLAAS Selbstfahrende Erntemaschinen GmbH, 33428 Harsewinkel (DE)
(72) Erfinder: Kirk, Kristian, 2100 Kopenhagen (DK); Lahmann, Dirk, 33790 Halle/Westf. (DE); Völkert, Marcel, 48157 Münster (DE); Look, Stefan, 48231 Warendorf (DE); Reimer, Daniel, 33818 Leopolshöhe (DE)
(74) Vertreter: CLAAS Gruppe

(57) **Zusammenfassung**

Eine landwirtschaftliche Arbeitsmaschine (1), insbesondere Erntemaschine umfasst Mittel zum Aufnehmen und Verarbeiten von Erntegut (5), einen relativ zu einer Karosserie der Arbeitsmaschine verstellbaren Auswurfkrümmer (4) zum Überladen des verarbeiteten Ernteguts (7) und einen Führerstand (3), an dem ein Anzeigeinstrument (27) zum Anzeigen einer aktuellen Stellung des Auswurfkrümmers (4) vorgesehen ist.

## Beschreibung

Die vorliegende Erfindung betrifft eine landwirtschaftliche Arbeitsmaschine, insbesondere eine Erntemaschine wie etwa einen Feldhäcksler oder Mähdrescher, mit Mitteln zum Aufnehmen und Verarbeiten von Erntegut und einem relativ zu einer Karosserie der Arbeitsmaschine verstellbaren Auswurfkrümmer zum Überladen des verarbeiteten Ernteguts auf ein Transportfahrzeug.

Aus EP 2 020 174 B1 ist eine solche Erntemaschine bekannt, bei dem die Stellung des Auswurfkrümmers überwacht wird, um den Überladevorgang so zu steuern, dass das Erntegut im Transportfahrzeug gleichmäßig verteilt wird, um das verfügbare Transportvolumen möglichst vollständig auszuschöpfen und so die Häufigkeit zu minimieren, mit der das Transportfahrzeug eine Sammelstelle aufsuchen muss, um dort entladen zu werden. Eine Kamera am Auswurfkrümmer ist mit einem Bildschirm des Führerstandes verbunden, um einem Fahrer der Arbeitsmaschine Einblick in einen Laderaum des Transportfahrzeugs zu gewähren und durch Korrigieren der Stellung von Arbeitsmaschine und Transportfahrzeug eine gleichmäßige Verteilung des Ernteguts im Laderaum zu erreichen.

Das Transportfahrzeug kann während der Ernte nur neben oder hinter der Arbeitsmaschine herfahren, da sich vor der Arbeitsmaschine der Bestand des Ernteguts befindet. Da der Fahrer diesen Bestand im Blick behalten muss, kann er nur schwerlich gleichzeitig die Stellung des Auswurfkrümmers beobachten. Wird diese Stellung beim Lenken der Arbeitsmaschine nicht korrekt berücksichtigt, dann besteht die Gefahr, dass ein über die Grenzen der Karosserie der Arbeitsmaschine überstehender Abschnitt des Auswurfkrümmers beim Fahren unberücksichtigt bleibt und durch Anstoßen an ein Hindernis beschädigt wird. Insbesondere wenn die Arbeitsmaschine an einem Feldrand entlanggefahren wird und Hindernisse wie etwa angrenzendes Gebüsch die Aufmerksamkeit beansprucht, hat der Fahrer kaum die Möglichkeit, sich nach dem Auswurfkrümmer umzuschauen, und es besteht die Gefahr, dass der Auswurfkrümmer durch Kontakt mit dem Gebüsch Schaden nimmt.

Um eine landwirtschaftliche Arbeitsmaschine mit verbesserter Betriebssicherheit zu schaffen, ist erfindungsgemäß vorgesehen, dass bei einer landwirtschaftlichen Arbeitsmaschine, insbesondere Erntemaschine, mit Mitteln zum Aufnehmen und Verarbeiten von Erntegut, einem relativ zu einer Karosserie der Arbeitsmaschine verstellbaren Auswurfkrümmer zum Überladen des verarbeiteten Ernteguts und einem Führerstand an letzterem ein Anzeigeinstrument zum Anzeigen einer aktuellen Stellung des Auswurfkrümmers vorgesehen ist. Das Vorhandensein des Anzeigeinstruments ermöglicht es dem Fahrer, sich der Stellung des Auswurfkrümmers zu vergewissern, ohne dafür den Blick längere Zeit vom Bestand abwenden oder eine unbequeme Haltung einnehmen zu müssen.

Um die Information über die Stellung des Auswurfkrümmers schnell und intuitiv wahrnehmbar zu machen, kann das Anzeigeinstrument eingerichtet sein, den Auswurfkrümmer relativ zu einer Karosserie der Arbeitsmaschine in einem Bild darzustellen.

Um das Bild zusammenzusetzen, können Bildverarbeitungsmittel ausgelegt sein, um eine Darstellung des Auswurfkrümmers mit wenigstens einer gespeicherten Darstellung der Karosserie zu überlagern. Die wiederholte Verwendung einer gespeicherten Darstellung der Karosserie erleichtert das Erkennen des Auswurfkrümmers und eventueller Veränderungen seiner Stellung im zusammengesetzten Bild.

In wenigstens einer gespeicherten Darstellung der Karosserie sollte ein zum Überladen zulässiger Winkelbereich des Auswurfkrümmers hervorgehoben sein. So kann der Fahrer auf einen Blick erkennen, ob in der aktuellen Stellung des Auswurfkrümmers ein Überladen möglich ist, oder ob vorher noch eine Anpassung der Stellung des Rohrkrümmers nötig ist.

Wenn mehrere Darstellungen mit hervorgehobenem zulässigem Winkelbereich gespeichert sind, dann können diese ausgewählt sein unter
- einer Darstellung mit zulässigem Winkelbereich auf der linken Seite der Arbeitsmaschine,
- einer Darstellung mit zulässigem Winkelbereich auf der rechten Seite der Arbeitsmaschine, und
- einer Darstellung mit zulässigem Winkelbereich hinter der Arbeitsmaschine.

Welche von diesen gespeicherten Darstellungen herangezogen wird, um sie mit der Darstellung des Auswurfkrümmers zu kombinieren, kann von einer manuellen Auswahl durch den Fahrer abhängen; denkbar ist auch, die Annäherung eines Transportfahrzeug an die Arbeitsmaschine über geeignete Sensoren zu erkennen und die Darstellung jeweils anhand der Richtung zu wählen, aus der sich das Transportfahrzeug nähert.

Die Bildverarbeitungsmittel können eingerichtet sein, die Darstellung mit hervorgehobenem Winkelbereich anzuzeigen, wenn wenigstens eine der folgenden Bedingungen erfüllt ist:
- der Auswurfkrümmer befindet sich innerhalb des in der Darstellung hervorgehobenen Winkelbereichs. Insbesondere wenn der Fahrer die Orientierung des Auswurfkrümmers manuell steuert, kann er so beurteilen, ob der Auswurfkrümmer sich einer zum Überladen geeigneten Stellung befindet, bzw. in welchem Umfang die Stellung des Transportfahrzeugs relativ zu Arbeitsmaschine variieren kann, ohne dass dadurch ein Überladen verhindert wird;
- der Fahrer hat einen Befehl zum Überladen gegeben. Ein solcher Befehl ist insbesondere dann sinnvoll, wenn die Arbeitsmaschine einen Tank für Erntegut aufweist, der zumindest zeitweilig einen Betrieb der Arbeitsmaschine ohne gleichzeitiges Überladen ermöglicht; in diesem Fall kann in der Darstellung ein Winkelbereich hervorgehoben sein, ohne dass sich der Auswurfkrümmer in diesem Winkelbereich befindet; die Darstellung dient in diesem Fall dazu, das Ansteuern einer Zielstellung des Auswurfkrümmers zu erleichtern, in der das Überladen stattfinden kann;
- das Ladevermögen für Erntegut der Arbeitsmaschine ist erschöpft. Das Sichtbarwerden des Winkelbereichs in der Darstellung verdeutlicht in diesem Fall dem Fahrer, dass er alsbald ein Überladen einleiten muss;
- ein Fahrzeug befindet sich im hervorgehobenen Winkelbereich; in diesem Fall weist das Sichtbarwerden des Winkelbereichs den Fahrer der Arbeitsmaschine darauf hin, dass mit dem Überladen in das Fahrzeug begonnen werden kann.

Um Erntegutverluste zu vermeiden, kann eine Steuereinheit eingerichtet sein, ein Überladen nur zuzulassen, wenn sich der Auswurfkrümmer sich in dem zulässigen Winkelbereich einer angezeigten Darstellung befindet.

Wie aus EP 2 020 174 B1 bekannt, kann die Arbeitsmaschine ferner eine Kamera aufweisen, die angeordnet ist, um Bilder einer Umgebung der Arbeitsmaschine, insbesondere eines sich in der Umgebung aufhaltenden Transportfahrzeugs, aufzunehmen.

Das Anzeigeinstrument kann dann insbesondere ein Ausschnitt eines Bildschirms sein, der mit der Kamera gekoppelt ist, um von der Kamera aufgenommene Bilder wiederzugeben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Ansicht eines erfindungsgemäßen Feldhäckslers und eines begleitenden Transport-fahrzeugs im Feldeinsatz;
- Fig. 2: ein auf einem Bildschirm des Führerstandes des Feldhäckslers angezeigtes Bild;
- Fig. 3: Varianten der in das Bild der Fig. 2 eingeblendeten Darstellung des Feldhäckslers und seines Auswurfkrümmers.

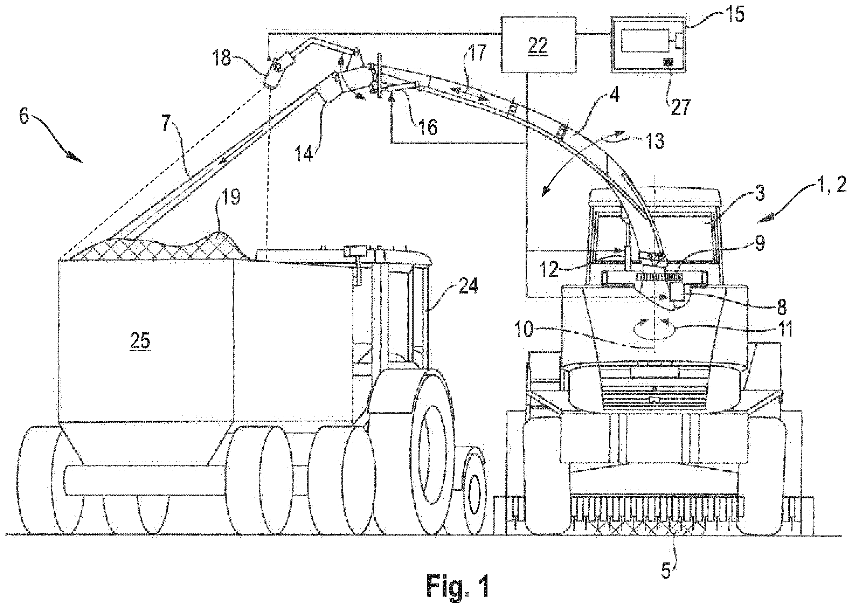

Fig. 1 zeigt in einer Ansicht von hinten eine als Feldhäcksler 2 ausgebildete landwirtschaftliche Arbeitsmaschine 1, die in ihrem stromabwärts des Führerstandes 3 angeordneten Bereich mit einem Auswurfkrümmer 4 zur Übergabe des vom Feldhäcksler 2 aufgenommenen und verarbeiteten Erntegutes 5 an ein Transportfahrzeug 6 versehen ist. Um sicherzustellen, dass der Auswurfkrümmer 4 den Gutstrom 7 sehr flexibel auf das Transportfahrzeug 6 übertragen kann, ist der Auswurfkrümmer 4 an seinem proximalen, an die Karosserie des Feldhäckslers angrenzenden Ende auf einer Getriebestufe 9 montiert, die über einen Hydraulik- oder Elektromotor 8 antreibbar ist. Bei Aktivierung dieser Getriebestufe 9 kann der Auswurfkrümmer 4 um eine vertikale Achse 10 gemäß Pfeilrichtung 11 geschwenkt werden. Darüber hinaus ist dem Auswurfkrümmer 4 in vertikaler Ausrichtung mindestens ein Hubzylinder 12 zugeordnet, wobei der Auswurfkrümmer 4 eine vertikale Schwenkbewegung gemäß Pfeilrichtung 13 ausführen kann, wenn der Hubzylinder 12 einer Druckbelastung oder Druckentlastung ausgesetzt ist, um den Auswurfkrümmer 4 zwischen einer angehobenen Betriebsstellung, wie in der Fig. 1 gezeigt, und einer Transport- oder Ruhestellung zu schwenken, in der der Auswurfkrümmer 4 nach hinten orientiert ist und sich auch mit einer vom proximalen Ende entfernten Stelle auf der Karosserie abstützt. An seinem freien oder distalen Ende ist der Auswurfkrümmer 4 in bekannter Weise mit einer Auswurfkappe 14 versehen, die durch Druckbeaufschlagung oder Druckentlastung mindestens eines Hubzylinders 16 schwenkbeweglich ist, um die Neigung zu steuern, mit der der Strahl des gehäckselten Ernteguts den Auswurfkrümmer 4 verlässt. Der Auswurfkrümmer 4 kann in Richtung eines Pfeils 17 teleskopisch ausfahrbar sein, um wenn nötig wechselnde Abstände zum Transportfahrzeug 6 zu überbrücken.

Eine Kamera 18 ist am freien Ende des Auswurfkrümmers 4, vorzugsweise an der Auswurfkappe 14, angebracht, um Bilder eines Laderaums des Transportfahrzeugs 6 zu liefern, die, indem sie auf einem Bildschirm des Führerstandes 3 angezeigt werden, dem Fahrer Einblick in den Laderaum gewähren.

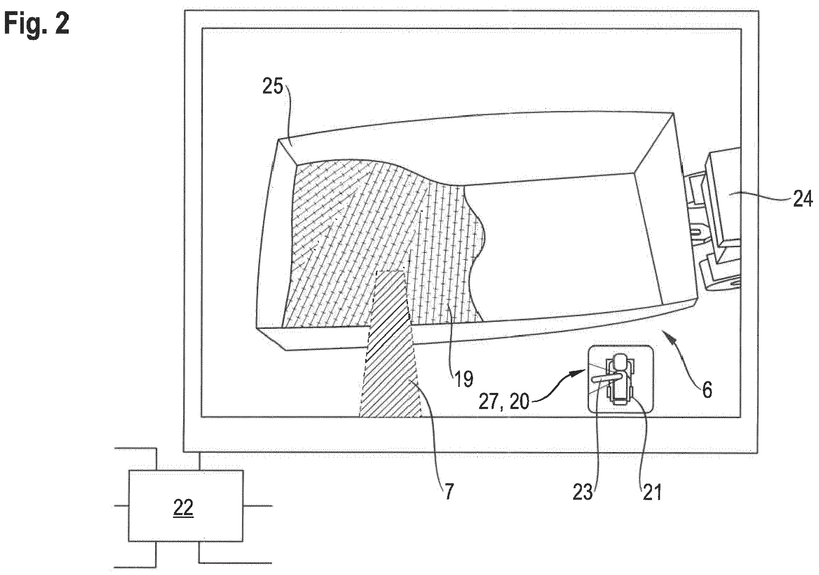

Eine Bildverarbeitungseinheit 22 ist zwischen die Kamera 18 und den Bildschirm eingefügt, um in die auf dem hier mit 15 bezeichneten Bildschirm angezeigten Bilder zusätzliche Informationen einzublenden. Fig. 2 zeigt ein Beispiel eines solchen Bildes mit eingeblendeten Zusätzen. Den größten Teil des Bildschirms 15 nimmt das von der Kamera 18 gelieferte Bild ein, es zeigt den Laderaum des Transportfahrzeugs 6, hier einen Anhänger 25 eines Traktors 24, sowie in einem Teil des Laderaums 25 angehäuftes gehäckseltes Erntegut 19. Der Auswurfkrümmer 4 liegt außerhalb des Sichtfeldes der Kamera 18; sichtbar ist jedoch ein Teil des Stroms von aus dem Auswurfkrümmer 4 austretendem Erntegut 7.

In einem Ausschnitt 27 des Bildschirms 15 außerhalb der vom Laderaum 25 belegten Fläche ist ein Icon 20 eingeblendet, das schematisch eine Draufsicht 21 auf die Arbeitsmaschine 1 zeigt. Das Icon 20 ist von der Bildverarbeitungseinheit 22 generiert, indem einer gespeicherten schematischen Darstellung, hier etwa einer Strichzeichnung, der Karosserie der Arbeitsmaschine 1 eine Darstellung 23 des Auswurfkrümmers 4 in einer Orientierung überlagert wird, die der gleichzeitig z.B. von einem Sensor an der Getriebestufe 9 gemessenen, realen Orientierung des Auswurfkrümmers 4 übereinstimmt. Solange die Bildverarbeitungseinheit 22 dieselbe Draufsicht 21 auf die Karosserie verwendet, ist das einzige veränderliche Detail des Icons 20 die Ausrichtung der Darstellung 23 des Auswurfkrümmers 4, so dass diese jederzeit schnell und einfach erkennbar ist.

Das in Fig. 2 dargestellte Icon 20 entspricht der in Fig. 1 gezeigten Fahrzeuganordnung: das Transportfahrzeug 6 fährt auf bereits abgeernteter Feldfläche links neben der Arbeitsmaschine 1 her, der Auswurfkrümmer 4 steht bezogen auf die Fahrtrichtung nach links über die Karosserie der Arbeitsmaschine 1 über, um den Laderaum 25 des Transportfahrzeugs 6 zu erreichen, und dementsprechend weist auch die Darstellung 23 des Auswurfkrümmers 4 in dem Icon 20 nach links.

Einer einfachen Ausgestaltung zufolge ist in der Bildverarbeitungseinheit 22 nur eine einzige Draufsicht 21 der Karosserie gespeichert, und das Icon 20 gibt nur über die Orientierung des Auswurfkrümmers 4 Auskunft. Es kann vorgesehen sein, dass das Icon 20 nur dann auf dem Bildschirm 15 eingeblendet wird, wenn der Auswurfkrümmer 4 sich nicht in der Ruhestellung befindet, da auch nur dann für den Fahrer die Notwendigkeit besteht, die Orientierung des Auswurfkrümmers 4 beim Navigieren zu berücksichtigen.

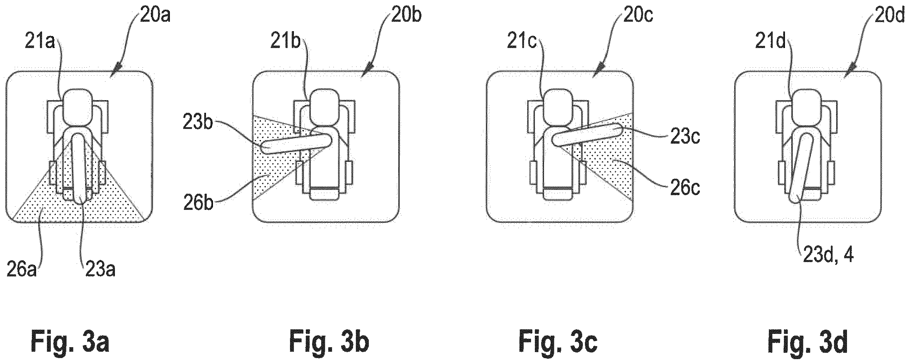

Einer weiterentwickelten Ausgestaltung zufolge sind in der Bildverarbeitungseinheit 22 mehrere Draufsichten 21a-d der Karosserie gespeichert, die, jeweils durch Überlagern einer Darstellung 23 des Auswurfkrümmers 4 zum Icon 20a-d vervollständigt, in Fig. 3 gezeigt sind, und unter denen die Bildverarbeitungseinheit die jeweils auf dem Bildschirm 15 anzuzeigende auswählt.

Das Icon 20d der Fig. 3d zeigt den Auswurfkrümmer 4 in der Ruhestellung; die zugrundeliegende Draufsicht 21d der Karosserie zeigt letztere als Umriss oder Strichzeichnung auf einfarbigem Untergrund. Die Icons 20a - c der Fig. 3a - c zeigen zusammen mit der Strichzeichnung der Karosserie jeweils ein Dreieck 26a - c, dessen Farbe vom übrigen Untergrund der Draufsichten 21a - d abweicht und von dem eine Ecke mit dem proximalen Ende der Darstellung 23a - c des Auswurfkrümmers 4 zusammenfällt und eine der Ecke gegenüberliegende Kante des Dreiecks am Rand des Icons 20a - c verläuft. Diese Dreiecke 26a- c bezeichnen jeweils einen Winkelbereich von Orientierungen, die der Auswurfkrümmer 4 einnehmen kann, um in ein der Arbeitsmaschine 1 nachfolgendes (im Falle der Fig. 3a), ein links (Fig. 3b) oder rechts (Fig. 3c) neben der Arbeitsmaschine 1 herfahrendes Transportfahrzeug überzuladen. Dies erlaubt es dem Fahrer der Arbeitsmaschine 1, mit einem Blick auf das jeweils auf dem Bildschirm 15 angezeigte Icon nicht nur die Orientierung des Auswurfkrümmers 4 zu erfassen, sondern auch, diese mit einem Ziel-Winkelbereich zu vergleichen. Während etwa im Falle der Fig. 3a und 3b der Auswurfkrümmer 4 in etwa eine Winkelhalbierende des Dreiecks 26a, 26b bildet, verläuft er im Fall der Fig. 3c nahe an einem vorderen Rand des Dreiecks 26c, was dem Fahrer zeigt, dass bei einem weiteren Zurückfallen der Arbeitsmaschine 1 relativ zum rechts begleitenden Transportfahrzeug der Auswurfkrümmer 4 das Transportfahrzeug nicht mehr erreicht und folglich entweder das Überladen unterbrochen werden müsste oder Erntegut verloren gehen würde, und dass es daher ratsam ist, die Geschwindigkeit der Arbeitsmaschine 1 etwas zu erhöhen.

Es gibt verschiedene Möglichkeiten, um eine Umschaltung zwischen den verschiedenen Icons 20a - d der Fig. 3a - d zu steuern.

Wenn der Fahrer die Orientierung des Auswurfkrümmers 4 manuell einstellt, kann es sinnvoll sein, das die Bildverarbeitungseinheit 22 jeweils dasjenige Icon 20a -c bzw. Dreieck 26a - c zum Anzeigen auswählt, in dessen Winkelbereich sich der Auswurfkrümmer 4 aktuell befindet, um so dem Fahrer das Zentrieren des Auswurfkrümmers 4 in diesem Winkelbereich zu erleichtern.

Wenn die die Arbeitsmaschine 1 mit Sensoren wie etwa Kameras oder Radarsensoren ausgestattet ist, die die Erfassung der Position eines Transportfahrzeugs 6 relativ zur Arbeitsmaschine 1 erlauben, ist es denkbar, das anzuzeigende Icon unter denen der Fig. 3a-c je nach der Richtung auszuwählen, in der das Transportfahrzeug 6 erfasst wird, d.h. eines der Icons 20a - c immer dann anzuzeigen, wenn sich im Winkelbereich des betreffenden Dreiecks 26a, b oder c ein Transportfahrzeug befindet, und gleichzeitig den Auswurfkrümmer 4 auf das erfasste Transportfahrzeug auszurichten.

Einer weiteren Ausgestaltung der Erfindung zufolge kann es sich bei der Arbeitsmaschine 1 um einen Mähdrescher handeln. Dieser verfügt über einen Korntank, um Erntegut zwischenzuspeichern, und muss daher im Ernteeinsatz nicht ständig von einem Transportfahrzeug begleitet werden. Die Auswahl eines anzuzeigenden Icons kann hier wie oben für den Feldhäcksler 2 erläutert erfolgen; zusätzlich besteht hier die Möglichkeit, ein Icon 20a - c der Fig. 3a - c oder alle drei Icons im Wechsel anzuzeigen, um den Fahrer darauf hinzuweisen, dass der Korntank in Kürze voll sein wird und ein Transportfahrzeug zum Abtanken des geernteten Korns benötigt wird.

Alternativ käme hier auch in Betracht, dass beim Mähdrescher eines der Icons 20a - c nur angezeigt wird, wenn der Fahrer das Abtanken zu einem in der von dem zugehörigen Dreieck 26aa - c angezeigten Richtung benachbarten Transportfahrzeug angeordnet hat, und dass solange nicht abgetankt wird, das Icon 20d mit einfarbigem Untergrund und jeweils die aktuelle Ausrichtung des Auswurfkrümmers 4 anzeigender Darstellung 23 angezeigt wird.

### Bezugszeichen

- 1: Arbeitsmaschine
- 2: Feldhäcksler
- 3: Führerstand
- 4: Auswurfkrümmer
- 5: Erntegut
- 6: Transportfahrzeug
- 7: Gutstrom
- 8: Elektromotor
- 9: Getriebestufe
- 10: vertikale Achse
- 11: Pfeilrichtung
- 12: Hubzylinder
- 13: Pfeilrichtung
- 14: Auswurfkappe
- 15: Bildschirm
- 16: Hubzylinder
- 17: Pfeil
- 18: Kamera
- 19: Erntegut
- 20: Icon
- 21: Draufsicht (auf Arbeitsmaschine)
- 22: Bildverarbeitungseinheit
- 23: Darstellung (des Auswurfkrümmers)
- 24: Traktor
- 25: Anhänger
- 26: Dreieck
- 27: Anzeigeinstrument

## Patentansprüche

1. Landwirtschaftliche Arbeitsmaschine (1), insbesondere Erntemaschine, mit Mitteln zum Aufnehmen und Verarbeiten von Erntegut (5), einem relativ zu einer Karosserie der Arbeitsmaschine verstellbaren Auswurfkrümmer (4) zum Überladen des verarbeiteten Ernteguts (7) und einem Führerstand (3), **dadurch gekennzeichnet, dass** an dem Führerstand (3) ein Anzeigeinstrument (27) zum Anzeigen einer aktuellen Stellung des Auswurfkrümmers (4) vorgesehen ist.

2. Landwirtschaftliche Arbeitsmaschine nach Anspruch 1, **dadurch gekennzeichnet, dass** das Anzeigeinstrument (27) eingerichtet ist, den Auswurfkrümmer (4) relativ zu einer Karosserie der Arbeitsmaschine (1) in einem Bild (20) darzustellen.

3. Landwirtschaftliche Arbeitsmaschine nach Anspruch 2, **gekennzeichnet durch** Bildverarbeitungsmittel (22) zum Zusammensetzen des Bildes (20) durch Überlagern einer Darstellung (23) des Auswurfkrümmers (4) mit wenigstens einer gespeicherten Darstellung (21) der Karosserie.

4. Landwirtschaftliche Arbeitsmaschine nach Anspruch 3, **dadurch gekennzeichnet, dass** wenigstens eine Darstellung (21a - c) der Karosserie gespeichert ist, in der jeweils ein zum Überladen zulässiger Winkelbereich (26a - c) des Auswurfkrümmers (4) hervorgehoben ist.

5. Landwirtschaftliche Arbeitsmaschine nach Anspruch 4, **dadurch gekennzeichnet, dass** wenigstens zwei Darstellungen (21a - c) mit hervorgehobenem zulässigem Winkelbereich (26a - c) gespeichert sind, die ausgewählt sind unter
- einer Darstellung (21b) mit zulässigem Winkelbereich (26b) auf der linken Seite der Arbeitsmaschine (1),
- einer Darstellung (21c) mit zulässigem Winkelbereich (26c) auf der rechten Seite der Arbeitsmaschine (1), und
- einer Darstellung (21a) mit zulässigem Winkelbereich (26a) hinter der Arbeitsmaschine (1).

6. Landwirtschaftliche Arbeitsmaschine nach Anspruch 4, **dadurch gekennzeichnet, dass** die Bildverarbeitungsmittel (22) eingerichtet sind, die wenigstens eine Darstellung (21a - c) mit hervorgehobenem Winkelbereich (26a - c) anzuzeigen, wenn wenigstens eine der folgenden Bedingungen erfüllt ist:
- der Auswurfkrümmer (4) befindet sich innerhalb des in der Darstellung (21a - c) hervorgehobenen Winkelbereichs;
- der Fahrer hat einen Befehl zum Überladen gegeben;
- das Ladevermögen für Erntegut der Arbeitsmaschine (1) ist erschöpft;
- ein Fahrzeug (6) befindet sich im hervorgehobenem Winkelbereich (26a - c).

7. Landwirtschaftliche Arbeitsmaschine nach einem der Ansprüche 4 bis 6, **gekennzeichnet durch** eine Steuereinheit zum Zulassen eines Überladens nur während der Auswurfkrümmer sich in dem zulässigen Winkelbereich einer angezeigten Darstellung befindet.

8. Landwirtschaftliche Arbeitsmaschine nach einem der vorhergehenden Ansprüche, **dadurch gekennzeichnet, dass** die Arbeitsmaschine (1) ferner eine Kamera (18) aufweist, die angeordnet ist, um Bilder einer Umgebung der Arbeitsmaschine (1) aufzunehmen.

9. Landwirtschaftliche Arbeitsmaschine nach Anspruch 8, **dadurch gekennzeichnet, dass** das Anzeigeinstrument ein Ausschnitt (27) eines Bildschirms (15) ist, der mit der Kamera (18) gekoppelt ist, um von der Kamera (18) aufgenommene Bilder wiederzugeben.
